# EUROPÄISCHE PATENTSCHRIFT

(11) **EP 3 597 358 B1**
(45) Veröffentlichungstag und Bekanntmachung des Hinweises auf die Patenterteilung: **07.09.2022**
(21) Anmeldenummer: 19186360.4
(22) Anmeldetag: 15.07.2019
(51) Int. Cl.: B23Q 1/00

(54) **SPANNVORRICHTUNG**
CLAMPING DEVICE
DISPOSITIF DE SERRAGE

(30) Priorität: 17.07.2018 DE 202018104109 U
(43) Veröffentlichungstag der Anmeldung: 22.01.2020
(73) Patentinhaber: Andreas Maier GmbH & Co. KG, 70734 Fellbach (DE)
(72) Erfinder: Dietterle, Martin, 71384 Weinstadt (DE)
(74) Vertreter: Hoeger, Stellrecht & Partner Patentanwälte mbB

(56) Entgegenhaltungen:
- WO-A1-2014/009201
- DE-A1-102013 014 036
- DE-A1-102016 112 770
- DE-T2- 60 001 028

## Beschreibung

Die vorliegende Erfindung betrifft eine Spannvorrichtung zum Einspannen eines Wechselkörpers an einem Gehäuse der Spannvorrichtung, umfassend ein Gehäuse und
eine Arretiervorrichtung zum Arretieren einer an dem Wechselkörper angeordneten Spannhülse relativ zu dem Gehäuse,
wobei die Arretiervorrichtung einen in dem Gehäuse zwischen einer Spannstellung und einer Freigabestellung beweglich geführten Spannkolben und mindestens einen Arretierkörper umfasst, der mittels des Spannkolbens von einer Freigabeposition, in welcher der Arretierkörper ein Wegbewegen der Spannhülse von dem Gehäuse freigibt, in eine Arretierposition, in welcher der Arretierkörper ein Wegbewegen der Spannhülse von dem Gehäuse verhindert, bewegbar ist.

Die DE 10 2016 112770 A1 offenbart eine Spannvorrichtung gemäß dem Oberbegriff von Anspruch 1.

Der vorliegenden Erfindung liegt die Aufgabe zugrunde, eine Spannvorrichtung der eingangs genannten Art zu schaffen, welche einfach aufgebaut und betätigbar ist, eine zuverlässige Arretierung der Spannhülse mit hoher Haltekraft ermöglicht und bei welcher es stets möglich ist, den Wechselkörper von dem Gehäuse der Spannvorrichtung zu lösen.

Diese Aufgabe wird durch eine Spannvorrichtung nach Anspruch 1 gelöst.

Dadurch, dass der Spannkolben durch Beaufschlagung des Spannkolbens mit einer Betätigungskraft auch ohne Zufuhr eines Druckfluids zu der Arretiervorrichtung von der Spannstellung in die Freigabestellung verschiebbar ist, ist gewährleistet, dass der Wechselkörper auch unter Notfallbedingungen, insbesondere bei einem Ausfall der Druckfluid-Zufuhr, zuverlässig von dem Gehäuse der Spannvorrichtung gelöst werden kann.

Der vorliegenden Erfindung liegt insbesondere das Konzept zugrunde, den Spannkolben durch die Einwirkung einer mechanischen Druckkraft oder einer mechanischen Zugkraft auf einen von außerhalb des Gehäuses der Spannvorrichtung zugänglichen Teil des Spannkolbens von der Spannstellung In die Freigabestellung zu verschieben.

Dabei kann die Betätigung des Spannkolbens insbesondere mechanisch von Hand erfolgen, beispielsweise dadurch, dass eine Bedienungsperson mit einem Finger einen Druck auf den Spannkolben ausübt.

Alternativ hierzu kann die Beaufschlagung des Spannkolbens mit einer Betätigungskraft auch mittels einer Maschine, die eine mechanische Kraft auf den Spannkolben überträgt, erfolgen, beispielsweise mittels eines Roboters.

Bei einer bevorzugten Ausgestaltung der Erfindung ist vorgesehen, dass der Spannkolben eine Betätigungsfläche aufweist, wobei durch Ausüben eines, vorzugsweise punktuellen, Drucks von außerhalb des Gehäuses der Spannvorrichtung auf die Betätigungsfläche der Spannkolben von der Spannstellung in die Freigabestellung verschiebbar ist.

Vorzugsweise ist vorgesehen, dass die Betätigungsfläche des Spannkolbens in der Spannstellung mit einer Stirnfläche des Gehäuses im Wesentlichen bündig ist oder über das Gehäuse vorsteht.

Besonders einfach verwendbar ist die erfindungsgemäße Spannvorrichtung, wenn der Spannkolben werkzeugfrei von der Spannstellung in die Freigabestellung verschiebbar ist.

Insbesondere ist es günstig, wenn für die Verschiebung des Spannkolbens von der Spannstellung in die Freigabestellung kein Schraubwerkzeug benötigt wird.

Es kann aber auch vorgesehen sein, dass der Spannkolben, insbesondere von einer Bedienungsperson oder einer Handhabungsvorrichtung, beispielsweise einem Roboter, mittels eines Betätigungshilfsmittels, beispielsweise eines Stiftes, eines Schraubendrehers, eines Bolzens oder einer Schraube, von der Spannstellung in die Freigabestellung verschiebbar ist.

Ein solches Betätigungshilfsmittel greift vorzugsweise unmittelbar an einer Betätigungsfläche des Spannkolbens an.

Bei einer bevorzugten Ausgestaltung der Erfindung ist vorgesehen, dass der Spannkolben im Wesentlichen geradlinig von der Spannstellung in die Freigabestellung verschiebbar ist.

Bei einer bevorzugten Ausgestaltung der Erfindung ist der Spannkolben in der Freigabestellung und/oder in der Spannstellung vollständig innerhalb des Gehäuses angeordnet.

Das elastische Vorspannelement der Vorspanneinrichtung kann insbesondere ein Federelement, beispielsweise eine Druck-Schraubenfeder, umfassen.

Als Widerlager für das elastische Vorspannelement kann die Arretiervorrichtung ein Abstützelement umfassen, an welchem das elastische Vorspannelement sich abstützt, insbesondere mit einem dem Spannkolben abgewandten Ende.

Das Abstützelement kann lösbar an dem Gehäuse gehalten sein.

Bei einer bevorzugten Ausgestaltung der Erfindung ist vorgesehen, dass die Arretiervorrichtung ein Rückhalteelement umfasst, welches das Vorspannelement und/oder das Abstützelement in dem Gehäuse zurückhält.

Die Arretiervorrichtung kann mindestens eine Dichtung zum fluiddichten Abdichten zwischen dem Spannkolben und dem Gehäuse umfassen.

Besonders günstig ist es, wenn die Arretiervorrichtung mindestens zwei Dichtungen zum fluiddichten Abdichten zwischen dem Spannkolben und dem Gehäuse umfasst, wobei im Bereich zwischen den zwei Dichtungen ein Druckfluidraum ausgebildet ist.

Dem Druckfluidraum ist vorzugsweise ein unter (gegenüber dem Umgebungsdruck) erhöhten Druck stehendes Druckfluid von einer außerhalb der Arretiervorrichtung und außerhalb des Gehäuses angeordneten Druckfluidquelle zuführbar.

Bei einer bevorzugten Ausgestaltung der Erfindung ist vorgesehen, dass das Gehäuse einen Anlageflansch mit einer quer, vorzugsweise im Wesentlichen senkrecht, zu einer Verschiebungsrichtung des Spannkolbens ausgerichteten Anlagefläche, an welche die Spannhülse anlegbar ist, umfasst.

Ferner kann vorgesehen sein, dass die Spannvorrichtung einen Grundkörper umfasst, an welchem das Gehäuse der Spannvorrichtung, vorzugsweise unverlierbar, festgelegt ist.

Dabei kann das Gehäuse insbesondere durch Formschluss, durch Kraftschluss, beispielsweise durch Reibschluss, und/oder durch Stoffschluss an dem Grundkörper festgelegt sein.

Ein der Spannhülse zugewandter Endbereich des Gehäuses steht vorzugsweise über eine der Spannhülse zugewandte Begrenzungsfläche des Grundkörpers vor.

Alternativ oder ergänzend hierzu kann vorgesehen, dass ein der Spannhülse abgewandter Endbereich des Gehäuses nicht über eine der Spannhülse abgewandte Begrenzungsfläche des Grundkörpers vorsteht.

Ein der Spannhülse zugewandter Endbereich des Gehäuses kann einen Arretierkörperkäfig zur Aufnahme von mehreren, insbesondere von mindestens zwei, besonders bevorzugt von mindestens vier, beispielsweise von mindestens sechs, Arretierkörpern umfassen.

Bei einer bevorzugten Ausgestaltung der Spannvorrichtung ist vorgesehen, dass der Spannkolben von Hand oder mittels einer Maschine, die eine mechanische Kraft auf den Spannkolben überträgt, mit einer Betätigungskraft beaufschlagbar und hierdurch von der Spannstellung in die Freigabestellung bewegbar ist.

Ein besonders einfacher Aufbau der Spannvorrichtung ergibt sich, wenn der Spannkolben von Hand oder mittels einer Maschine, die eine mechanische Kraft auf den Spannkolben überträgt, unmittelbar mit einer Betätigungskraft beaufschlagbar und hierdurch von der Spannstellung in die Freigabestellung bewegbar ist.

Die erfindungsgemäße Spannvorrichtung eignet sich insbesondere zur Verwendung in einer Kombination aus einer erfindungsgemäßen Spannvorrichtung und einem an dem Gehäuse einspannbaren Wechselkörper, an dem mindestens eine Spannhülse angeordnet, insbesondere festgelegt, ist.

Dabei ist vorzugsweise vorgesehen, dass der Spannkolben die Spannhülse in der Freigabestellung und/oder in der Spannstellung nicht berührt.

Ferner kann vorgesehen sein, dass der Spannkolben und/oder das Gehäuse bei an der Spannvorrichtung angeordnetem Wechselkörper in der Spannstellung und/oder in der Freigabestellung des Spannkolbens nicht über eine dem Gehäuse abgewandte Begrenzungsfläche des Wechselkörpers vorsteht.

Als Druckfluid kann grundsätzlich eine unter Druck stehende Flüssigkeit, beispielsweise ein Drucköl, oder ein unter Druck stehendes Gas, beispielsweise Druckluft, verwendet werden.

Ein mit dem Druckfluid befüllbarer Druckfluidraum der Spannvorrichtung ist vorzugsweise auf einer Seite des Spannkolbens angeordnet, welche bei an der Spannvorrichtung angeordnetem Wechselkörper dem Wechselkörper zugewandt ist.

Ein Federelement zum Vorspannen des Spannkolbens in die Spannstellung ist vorzugsweise auf einer Seite des Spannkolbens angeordnet, welche bei an der Spannvorrichtung angeordnetem Wechselkörper dem Wechselkörper abgewandt ist.

Der Spannkolben kann vorzugsweise mechanisch von der Spannstellung in die Freigabestellung überführt werden, indem eine Bedienungsperson den Spannkolben von Hand längs einer Verschiebungsrichtung des Spannkolbens von der Spannstellung in die Freigabestellung drückt.

Weitere Merkmale und Vorteile der Erfindung sind Gegenstand der nachfolgenden Beschreibung und der zeichnerischen Darstellung eines Ausführungsbeispiels.

In den Zeichnungen zeigen:

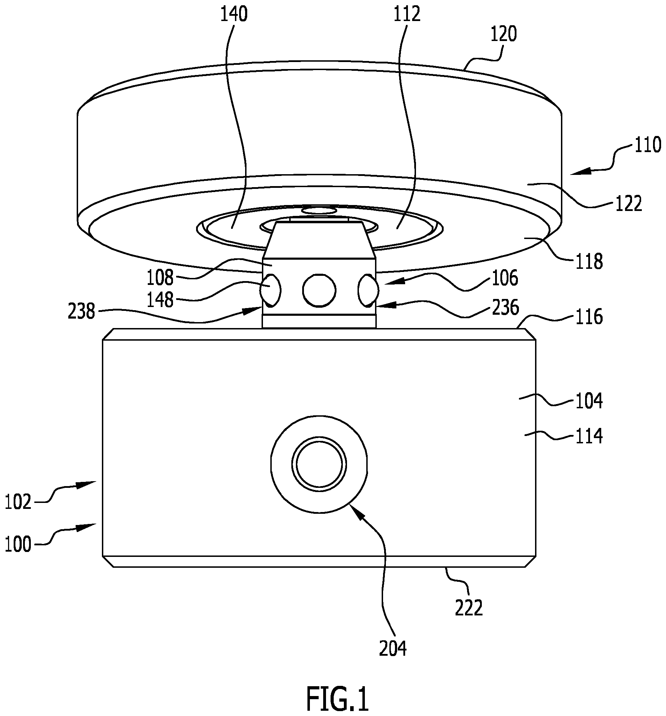

- Fig. 1: eine perspektivische Darstellung einer Kombination aus einem Wechselkörper und einer Spannvorrichtung zum Einspannen des Wechselkörpers an einem Grundkörper, an welchem ein Gehäuse der Spannvorrichtung angeordnet ist, wobei die Spannvorrichtung den Grundkörper, das Gehäuse und eine in dem Gehäuse angeordnete Arretiervorrichtung umfasst und an dem Wechselkörper eine Spannhülse angeordnet ist;

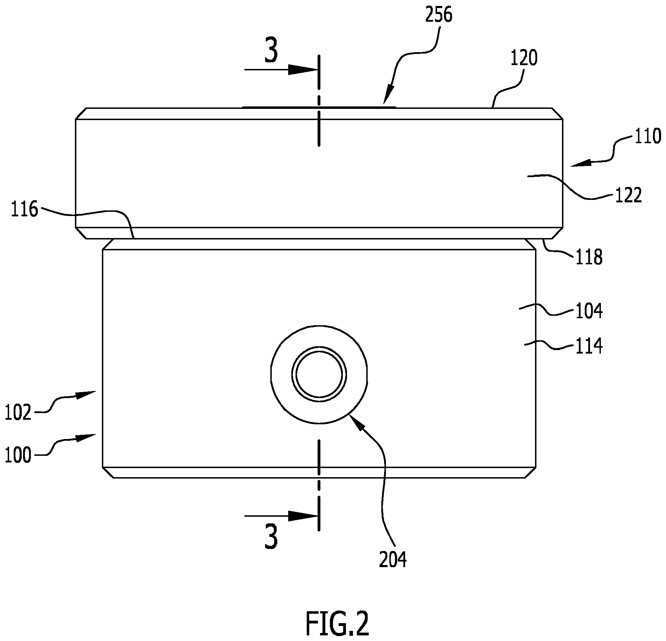

- Fig. 2: eine Seitenansicht der Kombination aus Spannvorrichtung und Wechselkörper aus Fig. 1, wobei der Wechselkörper auf den Grundkörper aufgesetzt worden ist und die Spannvorrichtung sich in einer Freigabestellung befindet, in welcher Arretierkörper der Arretiervorrichtung in einer Freigabeposition der Arretierkörper angeordnet sind;

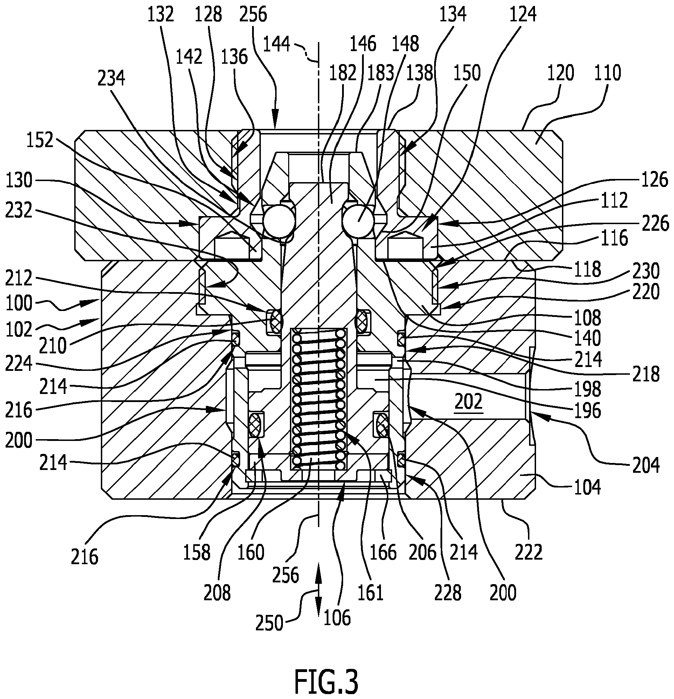

- Fig. 3: einen Längsschnitt durch die Kombination aus Spannvorrichtung und Wechselkörper aus Fig. 2, längs der Linie 3-3 in Fig. 2, wobei ein Spannkolben der Arretiervorrichtung sich in einer Freigabestellung befindet, in welcher Arretierkörper der Arretiervorrichtung in einer Freigabeposition der Arretierkörper angeordnet sind;

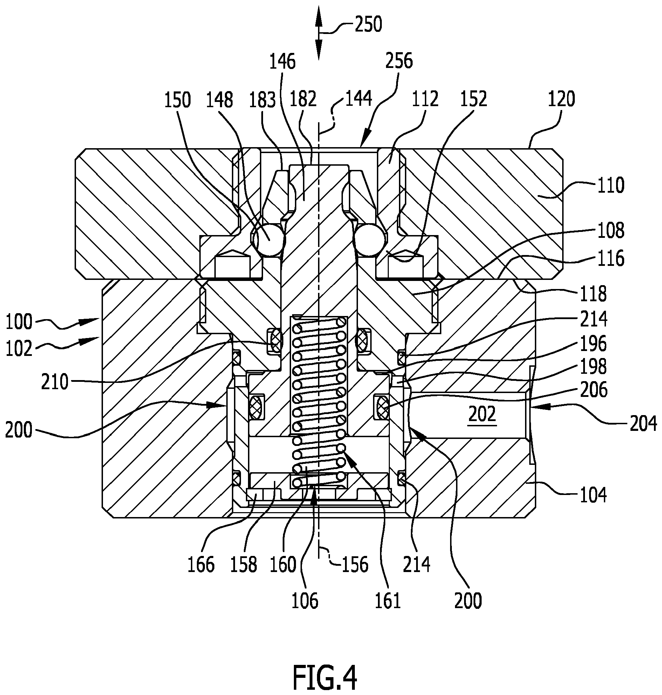

- Fig. 4: einen der Fig. 3 entsprechenden Längsschnitt durch die Kombination aus Spannvorrichtung und Wechselkörper aus Fig. 2, wobei der Spannkolben der Arretiervorrichtung sich in einer Spannstellung befindet, in welcher der Spannkolben die Arretierkörper der Arretiervorrichtung in einer Arretierposition festhält;

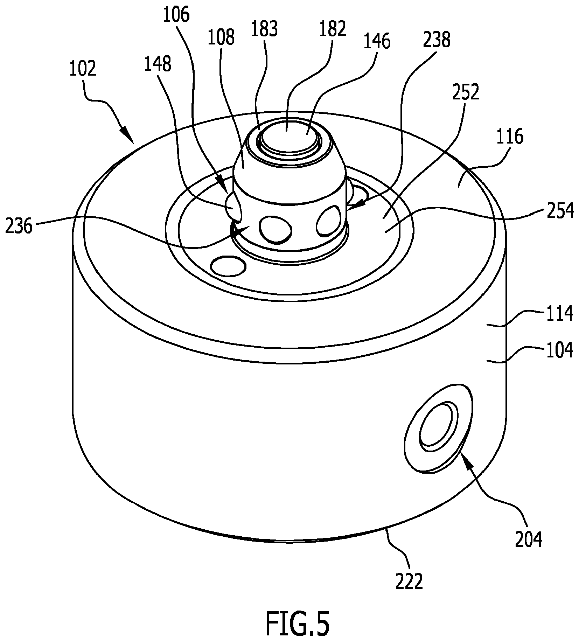

- Fig. 5: eine perspektivische Darstellung der Spannvorrichtung aus den Fig. 1 bis 4, welche einen Grundkörper, ein an dem Grundkörper gehaltenes Gehäuse und eine in dem Gehäuse angeordnete Arretiervorrichtung umfasst, mit der Blickrichtung von oben auf eine Anlagefläche des Gehäuses und auf eine obere Begrenzungsfläche des Grundkörpers;

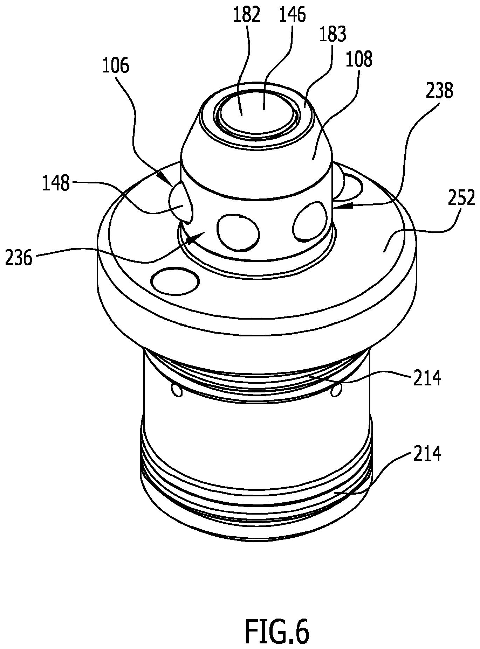

- Fig. 6: eine perspektivische Darstellung des Gehäuses und der darin angeordneten Arretiervorrichtung;

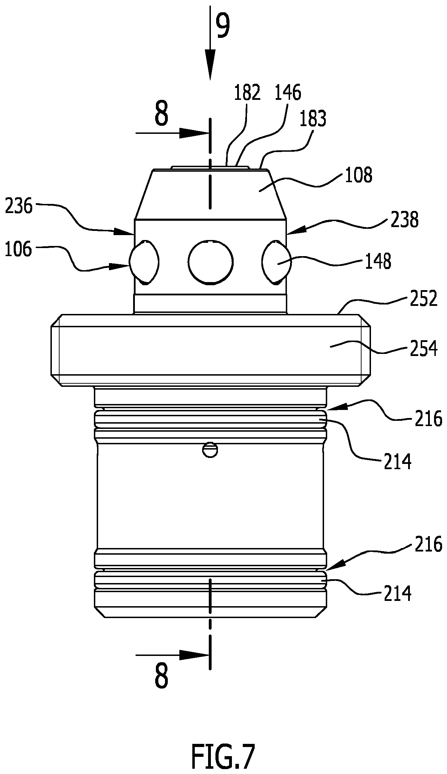

- Fig. 7: eine Seitenansicht des Gehäuses und der Arretiervorrichtung aus Fig. 6;

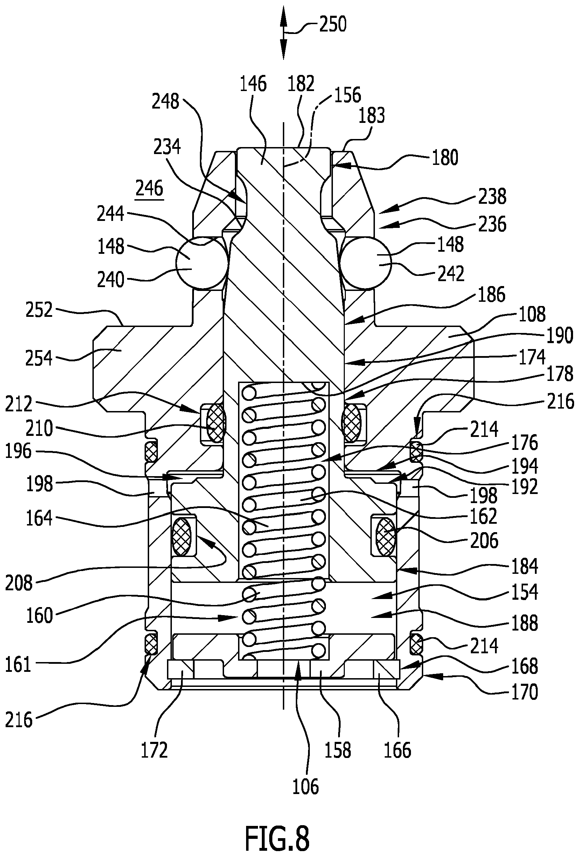

- Fig. 8: einen Längsschnitt durch das Gehäuse und die Arretiervorrichtung aus Fig. 7, längs der Linie 8-8 in Fig. 7, wobei der Spannkolben sich in einer Spannstellung befindet, in welcher der Spannkolben die Arretierkörper der Arretiervorrichtung in einer Arretierposition festhält;

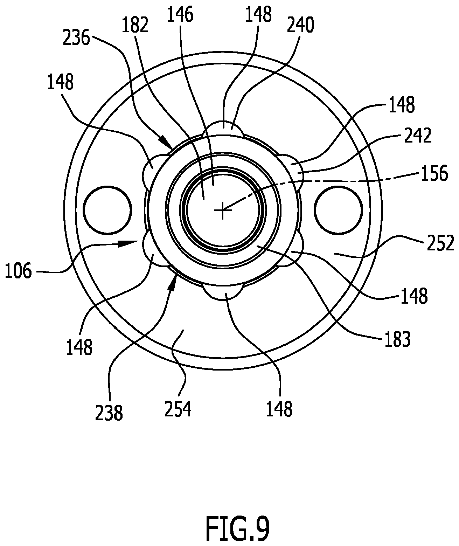

- Fig. 9: eine Draufsicht von oben auf das Gehäuse und die Arretiervorrichtung aus den Fig. 7 und 8, mit der Blickrichtung in Richtung des Pfeiles 9 in Fig. 7; und

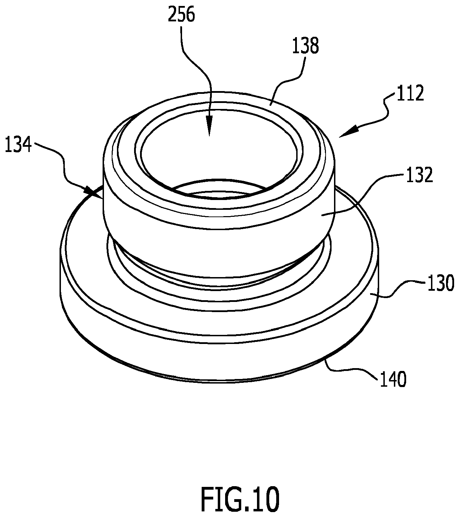

- Fig. 10: eine perspektivische Darstellung einer Spannhülse, welche in der Kombination aus Spannvorrichtung und Wechselkörper, die in den Fig. 1 bis 4 dargestellt ist, an dem Wechselkörper festgelegt ist.

Gleiche oder funktional äquivalente Elemente sind in allen Figuren mit denselben Bezugszeichen bezeichnet.

In den Fig. 1 bis 4 ist eine als Ganzes mit 100 bezeichnete Kombination aus einer Spannvorrichtung 102, welche einen Grundkörper 104 und eine Arretiervorrichtung 106, die in einem Gehäuse 108 angeordnet ist, umfasst, und einem an dem Grundkörper 104 und an dem Gehäuse 108 eingespannten Wechselkörper 110, an welchem eine der Arretiervorrichtung 106 zugeordnete Spannhülse 112 angeordnet ist, dargestellt.

Wie beispielsweise aus Fig. 5 zu ersehen ist, weist der Grundkörper 104 eine, vorzugsweise im Wesentlichen ebene, obere Begrenzungsfläche 116 auf, an welcher der Wechselkörper 110 im eingespannten Zustand, vorzugsweise im Wesentlichen flächig, mit einer unteren Begrenzungsfläche 118 anliegt. Ferner weist der Wechselkörper 110 eine der unteren Begrenzungsfläche 118 gegenüberliegende, vorzugsweise im Wesentlichen parallel zu der unteren Begrenzungsfläche 118 ausgerichtete, obere Begrenzungsfläche 120 auf.

Im Übrigen ist die Form des Wechselkörpers 110 beliebig; der Wechselkörper 110 kann beispielsweise als eine im Wesentlichen quaderförmige oder als eine im Wesentlichen zylindrische oder hohlzylindrische Wechselplatte 122 ausgebildet sein.

Auch die Form des Grundkörpers 104 ist beliebig; der Grundkörper 104 kann beispielsweise als eine im Wesentlichen quaderförmige oder als eine im Wesentlichen zylindrische oder hohlzylindrische Grundplatte 114 ausgebildet sein.

Der Grundkörper 101 kann an einem Untergrund, beispielsweise an einem Maschinentisch, festgelegt sein, insbesondere lösbar festgelegt sein.

Wie am besten aus den Fig. 3 und 4 zu ersehen ist, wird der Wechselkörper 110 quer, vorzugsweise im Wesentlichen senkrecht, zu der unteren Begrenzungsfläche 118 von einer Aufnahmebohrung 124 durchsetzt.

Die Aufnahmebohrung 124 kann gestuft ausgebildet sein, mit einem an der unteren Begrenzungsfläche 118 mündenden Abschnitt 126 größeren Durchmessers und mit einem an der oberen Begrenzungsfläche 120 mündenden Abschnitt 128 kleineren Durchmessers.

In die Aufnahmebohrung 124 ist die Spannhülse 112 eingesetzt, welche in Fig. 10 separat dargestellt ist.

Die Spannhülse 112 weist einen Abschnitt 130 größeren Durchmessers auf, welcher von dem Abschnitt 126 größeren Durchmessers der Aufnahmebohrung 124 aufgenommen wird, und einen Abschnitt 132 kleineren Durchmessers, der von dem Abschnitt 128 kleineren Durchmessers der Aufnahmebohrung 124 aufgenommen wird.

Der Abschnitt 132 kleineren Durchmessers der Spannhülse 112 ist vorzugsweise mit einem Außengewinde 134 versehen, welches in ein hierzu komplementäres Innengewinde 136 des Abschnitts 128 kleineren Durchmessers der Aufnahmebohrung 124 eingreift, wodurch die Spannhülse 112 lösbar an dem Wechselkörper 110 gehalten ist.

Eine obere Stirnfläche 138 der Spannhülse 112 ist vorzugsweise im Wesentlichen bündig mit der oberen Begrenzungsfläche 120 des Wechselkörpers 110 oder steht über die obere Begrenzungsfläche 120 des Wechselkörpers 110 über.

Eine untere Stirnfläche 140 der Spannhülse 102 ist vorzugsweise im Wesentlichen bündig mit der unteren Begrenzungsfläche 118 des Wechselkörpers 110.

Die Spannhülse 112 ist im Wesentlichen hohlzylindrisch ausgebildet und weist an ihrer Innenseite eine Aufnahmenut 142 auf, welche eine Längsmittelachse 144 der Spannhülse 112 ringförmig umgibt und welche in einer Spannstellung eines Spannkolbens 146 der Arretiervorrichtung 106 Arretierkörper 148 der Arretiervorrichtung 106 teilweise aufnimmt.

In Fig. 4 befindet sich der Spannkolben 146 in dieser Spannstellung.

Dabei presst der Spannkolben 146 die Arretierkörper 148 gegen eine, vorzugsweise konisch ausgebildete, Andrückfläche 150 an der Innenseite eines Hinterschneidungsabschnitts 152 der Spannhülse 112, welcher zwischen der oberen Stirnfläche 138 und der unteren Stirnfläche 140 der Spannhülse 112 ausgebildet ist und im eingespannten Zustand des Wechselkörpers 110 die Arretierkörper 148 der Arretiervorrichtung 106 hintergreift.

In Fig. 3 befindet sich der Spannkolben 146 in einer Freigabestellung, in welcher der Spannkolben 146 eine Bewegung der Arretierkörper 148 radial einwärts aus der Aufnahmenut 142 der Spannhülse 112 heraus freigibt.

Bei dem zeichnerisch dargestellten Ausführungsbeispiel ist die Spannhülse 110 durch Formschluss an dem Wechselkörper 110 festgelegt; alternativ hierzu kann auch vorgesehen sein, dass die Spannhülse 112 durch einen anders ausgebildeten Formschluss, durch Stoffschluss und/oder durch Kraftschluss, insbesondere Reibschluss, an dem Wechselkörper 110 festgelegt ist.

Die mit der Spannhülse 112 im eingespannten Zustand des Wechselkörpers 110 zusammenwirkende Arretiervorrichtung 106, welche in dem Gehäuse 108 angeordnet ist, ist einzeln in den Fig. 6 bis 9 dargestellt.

Wie am besten aus Fig. 8 zu ersehen ist, ist der Spannkolben 146 der Arretiervorrichtung 106 in einem Innenraum 154 des Gehäuses 108 längs einer Längsmittelachse 156 der Arretiervorrichtung 106 axial geradlinig verschieblich geführt.

In dem Innenraum 154 des Gehäuses 108 ist ferner ein Abstützelement 158 angeordnet, an welchem sich ein dem Spannkolben 146 abgewandtes Ende eines elastischen Vorspannelements 160, welches eine elastische Vorspanneinrichtung 161 der Arretiervorrichtung 106 bildet, abstützt.

Das elastische Vorspannelement 160 kann insbesondere als ein Federelement 162, beispielsweise als eine Druck-Schraubenfeder 164, ausgebildet sein.

Das Abstützelement 158 wird in dem Innenraum 154 durch ein Rückhalteelement 166 zurückgehalten, welches in einer Ringnut 168 an einem der Spannhülse 112 abgewandten Endbereich 170 des Gehäuses 108 vorgesehen ist.

Das Rückhalteelement 166 steht aus der Ringnut 168 in den Innenraum 154 des Gehäuses 108 vor und bildet so einen Anschlag für das Abstützelement 158, welches ein Herausbewegen des Abstützelements 158 aus dem Innenraum 154 des Gehäuses 108 verhindert.

Das Rückhalteelement 166 kann beispielsweise als ein Federring 172 ausgebildet sein.

Ein dem Abstützelement 158 abgewandtes weiteres Ende des elastischen Vorspannelements 160 stützt sich an einer Stirnwand 174 eines Aufnahmeraums 176 ab, welcher in einem dem Abstützelement 158 zugewandten Endbereich 178 des Spannkolbens 146 ausgebildet ist.

An einem dem Abstützelement 158 abgewandten weiteren Endbereich 180 des Spannkolbens 146 ist eine, vorzugsweise im Wesentlichen senkrecht zu der Längsmittelachse 156 der Arretiervorrichtung 106 und insbesondere des Spannkolbens 146 ausgerichtete, vorzugsweise im Wesentlichen ebene, Betätigungsfläche 182 angeordnet.

Die Betätigungsfläche 182 ist in der Spannstellung des Spannkolbens 146 im Wesentlichen bündig mit einer der Spannhülse 112 zugewandten Stirnfläche 183 des Gehäuses 108 oder steht über das Gehäuse 108 vor.

Der Spannkolben 146 umfasst einen dem Abstützelement 158 zugewandten Abschnitt 184 größeren Durchmessers und einen dem Abstützelement 158 abgewandten Abschnitt 186 kleineren Durchmessers.

Der Innenraum 154 des Gehäuses 108 umfasst einen dem Abstützelement 158 zugewandten Abschnitt 188 größeren Durchmessers und einen dem Abstützelement 158 abgewandten Abschnitt 190 kleineren Durchmessers.

In der Spannstellung des Spannkolbens 146, welche in den Fig. 8 und 4 dargestellt ist, ist der Abschnitt 186 kleineren Durchmessers des Spannkolbens 146 in dem Abschnitt 190 kleineren Durchmessers des Innenraums 154 des Gehäuses 108 aufgenommen, während der Abschnitt 184 größeren Durchmessers des Spannkolbens 146 in dem Abschnitt 188 größeren Durchmessers des Innenraums 154 des Gehäuses 108 aufgenommen ist.

Zwischen einer Stufe 192 des Spannkolbens 146, an welchem der Abschnitt 184 größeren Durchmessers des Spannkolbens 146 in den Abschnitt 186 kleineren Durchmessers des Spannkolbens 146 übergeht, einerseits und einer Stufe 194 des Innenraums 154, an welcher der Abschnitt 188 größeren Durchmessers des Innenraums 154 in den Abschnitt 190 kleineren Durchmessers des Innenraums 154 übergeht, ist ein Druckfluidraum 196 ausgebildet, welcher über eine oder mehrere Druckfluidbohrungen 198, die sich vorzugsweise quer, insbesondere im Wesentlichen senkrecht, zu der Längsmittelachse 156 der Arretiervorrichtung 106 erstrecken, in Fluidverbindung mit einer Druckfluidkammer 200 in dem Grundkörper 104, welche das in den Grundkörper 104 eingesetzte Gehäuse 108 vorzugsweise ringförmig umgibt, steht.

Die Druckfluidkammer 200 steht über einen Druckfluidkanal 202, welcher sich vorzugsweise im Wesentlichen radial zu der Längsmittelachse 156 der Arretiervorrichtung 106 erstreckt, in Fluidverbindung mit einem Druckfluidanschluss 204 an einer Außenfläche des Grundkörpers 104.

An den Druckfluidanschluss 204 ist eine (nicht dargestellte) Druckfluidleitung anschließbar, über welche ein unter (gegenüber dem Umgebungsdruck) erhöhtem Druck stehendes Druckfluid von einer (nicht dargestellten) Druckfluidquelle zu dem Druckfluidanschluss 204 zuführbar ist.

In der Druckfluidleitung ist vorzugsweise ein (nicht dargestelltes) Steuerventil angeordnet, mittels welchem die Fluidverbindung zwischen der Druckfluidquelle und dem Druckfluidanschluss 204 selektiv geöffnet oder geschlossen werden kann.

Das Druckfluid kann eine Flüssigkeit, beispielsweise ein Drucköl, oder ein Gas, beispielsweise Druckluft, sein.

Um ein Entweichen des Druckfluids aus dem Druckfluidraum 196 zu vermeiden, ist vorzugsweise vorgesehen, dass der Spannkolben 146 mit einer Dichtung 206 versehen ist, welche den Abschnitt 184 größeren Durchmessers des Spannkolbens 146 ringförmig umgibt.

Diese Dichtung 206 ist vorzugsweise in einer an dem Spannkolben 146 vorgesehenen Ringnut 208 angeordnet.

Ferner ist zur Abdichtung des Druckfluidraums 196 vorzugsweise eine weitere Dichtung 210 vorgesehen, welche den Abschnitt 186 kleineren Durchmessers des Spannkolbens 146 ringförmig umgibt und beispielsweise in einer Ringnut 212 an einer den Abschnitt 190 kleineren Durchmessers des Innenraums 154 des Gehäuses 108 begrenzenden Innenwand des Gehäuses 108 angeordnet ist.

Zur Abdichtung der Druckfluidkammer 200 in dem Grundkörper 104 können eine oder mehrere Dichtungen 214 vorgesehen sein, welche unterhalb bzw. oberhalb der Druckfluidkammer 200 das Gehäuse 108 ringförmig umgeben.

Diese Dichtungen 214 können beispielsweise jeweils in einer Ringnut 216 angeordnet sein, welche an einer Außenseite des Gehäuses 108 oder an einer einen Innenraum 218 in dem Grundkörper 104 begrenzenden Innenwand des Grundkörpers 104 angeordnet sind.

Der Innenraum 218 des Grundkörpers 104 ist vorzugsweise gestuft ausgebildet und umfasst vorzugsweise einen an der oberen Begrenzungsfläche 116 des Grundkörpers 104 mündenden Abschnitt 220 größeren Durchmessers des Innenraums 218 und einen an einer der oberen Begrenzungsfläche 116 des Grundkörpers 104 gegenüberliegenden unteren Begrenzungsfläche 222 des Grundkörpers 104 mündenden Abschnitt 224 kleineren Durchmessers des Innenraums 218 des Grundkörpers 104.

Das Gehäuse 108 der Spannvorrichtung 102 ist vorzugsweise ebenfalls stufenförmig ausgebildet und umfasst einen im eingespannten Zustand des Wechselkörpers 210 der Spannhülse 112 zugewandten Abschnitt 226 größeren Durchmessers und einen der Spannhülse 112 abgewandten Abschnitt 228 kleineren Durchmessers.

Der Abschnitt 228 kleineren Durchmessers des Gehäuses 108 ist in dem Abschnitt 224 kleineren Durchmessers des Innenraums 228 des Grundkörpers 104 aufgenommen.

Der Abschnitt 226 größeren Durchmessers des Gehäuses 108 ist in dem Abschnitt 220 größeren Durchmessers des Innenraums 218 des Grundkörpers 104 aufgenommen.

Der Abschnitt 226 größeren Durchmessers des Gehäuses 108 weist vorzugsweise ein Außengewinde 230 auf, welches in Eingriff steht mit einem hierzu komplementären Innengewinde 232, das an einer Begrenzungswand des Abschnitts 220 größeren Durchmessers des Innenraums 218 des Grundkörpers 104 vorgesehen ist.

Hierdurch ist das Gehäuse 108 formschlüssig und lösbar an dem Grundkörper 104 festgelegt.

Das Gehäuse 104 kann auch in anderer Weise formschlüssig an dem Grundkörper 104 gehalten sein. Alternativ oder ergänzend hierzu kann auch vorgesehen sein, dass das Gehäuse 108 durch Stoffschluss oder durch Kraftschluss, insbesondere Reibschluss, an dem Grundkörper 104 festgelegt ist.

Durch die Rückstellkraft des elastischen Vorspannelements 160, das sich einerseits an dem Abstützelement 158 und andererseits an dem Spannkolben 146 abstützt, wird der Spannkolben 146 in die insbesondere in den Fig. 4 und 8 dargestellte Spannstellung vorgespannt, in welcher der Spannkolben 146 mit einer - beispielsweise im Wesentlichen konisch ausgebildeten - Spannschulter 234 die Arretierkörper 148 der Arretiervorrichtung 106 in radialer Richtung von der Längsmittelachse 156 der Arretiervorrichtung 106 weg in die insbesondere in den Fig. 4 bis 9 dargestellte Arretierposition drückt, in welcher die Arretierkörper 148 ihren maximalen Abstand von der Längsmittelachse 156 der Arretiervorrichtung 106 aufweisen.

Ein über die obere Begrenzungsfläche 116 des Grundkörpers 104 überstehender Endbereich 236 des Gehäuses 108 bildet einen Arretierkörperkäfig 238 zur Aufnahme von mehreren, vorzugsweise mindestens drei, insbesondere mindestens vier, beispielsweise sechs, in der Umfangsrichtung des Gehäuses 108 - vorzugsweise im Wesentlichen äquidistant - voneinander beabstandeten Arretierkörpern 148 (siehe insbesondere Fig. 9).

Die Arretierkörper 148 sind vorzugsweise als Wälzkörper 240, insbesondere als Arretierkugeln 242, ausgebildet.

Jeder der Arretierkörper 148 steht in Eingriff mit jeweils einer zugeordneten Arretierkörperbohrung 244, welche das Gehäuse 108 in im Wesentlichen radialer Richtung durchsetzt und sich mit wachsendem Abstand von der Längsmittelachse 156 der Arretiervorrichtung 106 verjüngt, so dass die Arretierkörper 148 sich nicht durch das radiale äußere Ende der jeweils zugeordneten Arretierkörperbohrung 244 hinaus in den Außenraum 246 des Gehäuses 108 bewegen können, sondern unverlierbar mit dem Gehäuse 108 und der Arretiervorrichtung 106 verbunden sind.

In der insbesondere in den Fig. 4 bis 9 dargestellten Spannstellung des Spannkolbens 146 werden die Arretierkörper 148 von der Spannschulter 234 des Spannkolbens 146 in ihre Arretierposition gedrückt, in welcher die Arretierkörper 148 den maximalen Abstand von der Längsmittelachse 156 der Arretiervorrichtung 106 aufweisen und maximal über die Außenwand des Gehäuses 108 in den Außenraum 246 des Gehäuses 108 überstehen.

Zwischen der Spannschulter 234 und der Betätigungsfläche 182 des Spannkolbens 146 ist ein verjüngter Abschnitt 248 des Spannkolbens 146 angeordnet, welcher einen geringeren Durchmesser aufweist als die Spannschulter 234, so dass die Arretierkörper 148 in der insbesondere in Fig. 3 dargestellten Freigabestellung des Spannkolbens 146, in welcher der verjüngte Abschnitt 248 des Spannkolbens 146 sich auf der Höhe der Arretierkörper 148 befindet, sich maximal radial nach innen zu der Längsmittelachse 156 der Arretiervorrichtung 106 hin bewegen können und in dieser Freigabeposition minimal oder gar nicht über die Außenwand des Gehäuses 108 überstehen.

Mittels der vorstehend beschriebenen Spannvorrichtung 102 wird ein Wechselkörper 110 wie folgt an der als Spannfläche dienenden oberen Begrenzungsfläche 116 des Grundkörpers 104 eingespannt:
Wenn der Wechselkörper 110 von dem Grundkörper 104 abgenommen ist, kein Fluiddruck in dem Druckfluidraum 196 erzeugt wird und auch keine Betätigungskraft auf die Betätigungsfläche 182 des Spannkolbens 146 ausgeübt wird, wird der Spannkolben 146 der Arretiervorrichtung 106 durch das elastische Vorspannelement 160 in die Spannstellung vorgespannt, welche in den Fig. 4 bis 9 dargestellt ist und in welcher der Spannkolben 146 die Arretierkörper 148 in der Arretierposition hält.

Vor dem Aufsetzen des Wechselkörpers 110 auf den Grundkörper 104 wird der Spannkolben 146 der Arretiervorrichtung 106 von der Spannstellung in die Freigabestellung überführt, indem durch Zufuhr von Druckfluid über den Druckfluidanschluss 204, den Druckfluidkanal 202, die Druckfluidkammer 200 und die Druckfluidbohrungen 198 zu dem Druckfluidraum 196 in dem Druckfluidraum 196 ein erhöhter Fluiddruck erzeugt wird, der den Spannkolben 146 mit einer resultierenden Druckkraft beaufschlagt, durch welche der Spannkolben 146 gegen die Rückstellkraft des elastischen Vorspannelements 160 von der Spannstellung in die in Fig. 3 dargestellte Freigabestellung bewegt wird.

Die Bewegung des Spannkolbens 146 von der Spannstellung in die Freigabestellung erfolgt dabei in einer zu der Längsmittelachse 156 der Arretiervorrichtung 106 parallel ausgerichteten Verschiebungsrichtung 250.

Durch diese Verschiebung des Spannkolbens 146 kommt die Spannschulter 234 außer Eingriff mit den Arretierkörpern 148, so dass die Arretierkörper 148 nicht mehr in ihrer Arretierposition festgehalten werden.

Die Arretierkörper 148 bewegen sich radial nach innen, in Richtung auf die Längsmittelachse 156 der Arretiervorrichtung 106 zu, so dass der Wechselkörper 110 mit der daran festgelegten Spannhülse 112 auf den Grundkörper 104 und das Gehäuse 108 der Spannvorrichtung 102 abgesenkt werden kann.

Wie aus Fig. 3 zu ersehen ist, kommt dabei die untere Stirnfläche 140 der Spannhülse 112 zur Anlage an einer im Wesentlichen senkrecht zur Längsmittelachse 156 der Arretiervorrichtung 106 ausgerichteten Anlagefläche 252 des als Anlageflansch 254 ausgebildeten Abschnitts 226 größeren Durchmessers des Gehäuses 108.

Ferner gelangt die untere Begrenzungsfläche 118 des Wechselkörpers 110 zur Anlage an der oberen Begrenzungsfläche 116 des Grundkörpers 104.

Um den Wechselkörper 110 in dieser Position an dem Grundkörper 104 und dem Gehäuse 108 mittels der Arretiervorrichtung 106 einzuspannen, wird der Fluiddruck in dem Druckfluidraum 196 verringert, indem das Steuerventil in der Druckfluidleitung so umgeschaltet wird, dass Druckfluid aus dem Druckfluidraum 196 über die Druckfluidbohrungen 198, die Druckfluidkammer 200, den Druckfluidkanal 202 und den Druckfluidanschluss 204 zu einer (nicht dargestellten) Druckfluidsenke abströmen kann.

Dadurch übersteigt die elastische Rückstellkraft des Vorspannelements 160 die von dem im Druckfluidraum 196 verbleibenden Druckfluid auf den Spannkolben 146 ausgeübte Druckkraft, so dass der Spannkolben 146 von dem Vorspannelement 160 längs der Verschiebungsrichtung 150 von der in Fig. 3 dargestellten Freigabestellung in die insbesondere in Fig. 4 dargestellte Spannstellung bewegt wird.

Während der Überführung von der Freigabestellung in die Spannstellung verdrängt die Spannschulter 234 des Spannkolbens 146 die Arretierkörper 148 von ihrer Freigabeposition radial nach außen in die Arretierposition, in welcher die Arretierkörper 148 an der Andrückfläche 150 der Spannhülse 112 anliegen und den Hinterschneidungsabschnitt 152 der Spannhülse 112 hintergreifen, so dass die Spannhülse 112 und damit der Wechselkörper 110 durch Formschluss gegen ein Wegbewegen von dem Grundkörper 104 und von dem Gehäuse 108 gesichert sind und gegen den Grundkörper 104 und das Gehäuse 108 verspannt sind.

In dieser eingespannten Stellung des Wechselkörpers 110 ist die Spannhülse 112 durch Anliegen ihrer inneren Begrenzungswand an der Umfangswand des Spannkolbens 146 positioniert und relativ zu der Arretiervorrichtung 106 zentriert.

Um den Wechselkörper 110 wieder von dem Grundkörper 104 und von dem Gehäuse 108 der Spannvorrichtung 102 abzunehmen, wird der Fluiddruck in dem Druckfluidraum 196 wieder erhöht, indem das Steuerventil in der Druckfluidleitung so umgeschaltet wird, dass unter erhöhtem Druck stehendes Druckfluid von der Druckfluidquelle durch die Druckfluidleitung, den Druckfluidanschluss 204, den Druckfluidkanal 202, die Druckfluidkammer 200 und die Druckfluidbohrungen 198 in den Druckfluidraum 196 gelangen kann, so dass die von dem Druckfluid im Druckfluidraum 196 auf den Spannkolben 146 ausgeübte Druckkraft die elastische Rückstellkraft des Vorspannelements 160 wieder übersteigt und der Spannkolben 146 längs der Verschiebungsrichtung 250 von der Spannstellung in die Freigabestellung bewegt wird, worauf der Wechselkörper 110 von dem Grundkörper 104 und von dem Gehäuse 108 längs der Verschiebungsrichtung 250 abgenommen werden kann.

Alternativ zu einer Lösung des Wechselkörpers 110 von dem Grundkörper 104 durch Zufuhr von Druckfluid in den Druckfluidraum 196 ist es, beispielsweise im Falle eines Ausfalls der Druckfluidzufuhr, auch möglich, den Spannkolben 146 mechanisch, durch Beaufschlagen der Betätigungsfläche 182 des Spannkolbens 146 mit einer mechanischen Betätigungskraft, auch ohne Zufuhr eines Druckfluids zu der Arretiervorrichtung 106 von der Spannstellung in die Freigabestellung zu verschieben.

Zur Durchführung einer solchen mechanischen Beaufschlagung des Spannkolbens 146 ist die Betätigungsfläche 182 im eingespannten Zustand des Wechselkörpers 110 durch eine Öffnung 256 an dem dem Gehäuse 108 der Spannvorrichtung 102 abgewandten Ende der Spannhülse 112 hindurch zugänglich.

Die mechanische Betätigung des Spannkolbens 146 kann beispielsweise dadurch erfolgen, dass eine Bedienungsperson manuell, beispielsweise mit einem Finger, oder mit einem Werkzeug eine mechanische Betätigungskraft auf die Betätigungsfläche 182 des Spannkolbens 146 ausübt.

Statt durch eine menschliche Bedienungsperson kann die Betätigung des Spannkolbens 146 zum Verschieben desselben von der Spannstellung in die Freigabestellung auch durch eine Maschine, insbesondere durch einen Roboter, erfolgen.

## Patentansprüche

1. Spannvorrichtung zum Einspannen eines Wechselkörpers (110) an einem Gehäuse (108) der Spannvorrichtung (102), umfassend ein Gehäuse (108) und
eine Arretiervorrichtung (106) zum Arretieren einer an dem Wechselkörper (110) angeordneten Spannhülse (112) relativ zu dem Gehäuse (108),
wobei die Arretiervorrichtung (106) einen in dem Gehäuse (108) zwischen einer Spannstellung und einer Freigabestellung beweglich geführten Spannkolben (146) und mindestens einen Arretierkörper (148) umfasst, der mittels des Spannkolbens (146) von einer Freigabeposition, in welcher der Arretierkörper (148) ein Wegbewegen der Spannhülse (112) von dem Gehäuse (108) freigibt, in eine Arretierposition, in welcher der Arretierkörper (148) ein Wegbewegen der Spannhülse (112) von dem Gehäuse (108) verhindert, bewegbar ist,
wobei die Arretiervorrichtung (106) eine elastische Vorspanneinrichtung (161) umfasst, mittels welcher der Spannkolben (146) in die SpannStellung vorspannbar ist, wobei die Vorspanneinrichtung (161) mindestens ein elastisches Vorspannelement (160) umfasst, welches auf der der Spannhülse (112) abgewandten Seite des Spannkolbens (146) angeordnet ist, und
wobei der Spannkolben (146) durch Beaufschlagung des Spannkolbens (146) mit einer Betätigungskraft ohne Zufuhr eines Druckfluids zu der Arretiervorrichtung (106) von der Spannstellung in die Freigabestellung verschiebbar ist,
**dadurch gekennzeichnet,**
**dass** der Spannkolben (146) auch durch Beaufschlagung einer der Spannhülse (112) zugewandten Seite des Spannkolbens (146) mit einem Druckfluid von der Spannstellung in die Freigabestellung verschiebbar ist.

2. Spannvorrichtung nach Anspruch 1, **dadurch gekennzeichnet, dass** der Spannkolben (146) eine Betätigungsfläche (182) aufweist, wobei durch Ausüben eines Drucks von außerhalb des Gehäuses (108) auf die Betätigungsfläche (182) der Spannkolben (146) von der Spannstellung in die Freigabestellung verschiebbar Ist.

3. Spannvorrichtung nach Anspruch 2, **dadurch gekennzeichnet, dass** die Betätigungsfläche (182) des Spannkolbens (146) in der Spannstellung mit einer Stirnfläche (183) des Gehäuses (108) bündig ist oder über das Gehäuse (108) vorsteht.

4. Spannvorrichtung nach einem der Ansprüche 1 bis 3, **dadurch gekennzeichnet, dass** der Spannkolben (146) werkzeugfrei von der Spannstellung in die Freigabestellung verschiebbar ist.

5. Spannvorrichtung nach einem der Ansprüche 1 bis 4, **dadurch gekennzeichnet, dass** der Spannkolben (146) geradlinig von der Spannstellung in die Freigabestellung verschiebbar ist.

6. Spannvorrichtung nach einem der Ansprüche 1 bis 5, **dadurch gekennzeichnet, dass** der Spannkolben (146) in der Freigabestellung und/oder in der Spannstellung vollständig innerhalb des Gehäuses (108) angeordnet ist.

7. Spannvorrichtung nach einem der Ansprüche 1 bis 6, **dadurch gekennzeichnet, dass** die Arretiervorrichtung (106) ein Abstützelement (158) umfasst, an welchem das Vorspannelement (160) sich abstützt.

8. Spannvorrichtung nach Anspruch 7, **dadurch gekennzeichnet, dass** Abstützelement (158) lösbar an dem Gehäuse (108) gehalten ist.

9. Spannvorrichtung nach einem der Ansprüche 7 oder 8, **dadurch gekennzeichnet, dass** die Arretiervorrichtung (106) ein Rückhalteelement (166) umfasst, welches das Vorspannelement (160) und/oder das Abstützelement (158) in dem Gehäuse (108) zurückhält.

10. Spannvorrichtung nach einem der Ansprüche 1 bis 9, **dadurch gekennzeichnet, dass** die Arretiervorrichtung (106) mindestens eine Dichtung (206, 210) zum fluiddichten Abdichten zwischen dem Spannkolben (146) und dem Gehäuse (108) umfasst.

11. Spannvorrichtung nach einem der Ansprüche 1 bis 10, **dadurch gekennzeichnet, dass** das Gehäuse (108) einen Anlageflansch (254) mit einer senkrecht zu einer Verschiebungsrichtung (250) des Spannkolbens (146) ausgerichteten Anlagefläche (252), an welche die Spannhülse (112) anlegbar ist, umfasst.

12. Spannvorrichtung nach einem der Ansprüche 1 bis 11, **dadurch gekennzeichnet, dass** die Spannvorrichtung (102) einen Grundkörper (104) umfasst, an welchem das Gehäuse (108) der Spannvorrichtung (102) festgelegt ist.

13. Spannvorrichtung nach Anspruch 12, **dadurch gekennzeichnet, dass** ein der Spannhülse (112) zugewandter Endbereich (236) des Gehäuses (108) über eine der Spannhülse (112) zugewandte Begrenzungsfläche (116) des Grundkörpers (104) vorsteht.

14. Spannvorrichtung nach einem der Ansprüche 12 oder 13, **dadurch gekennzeichnet, dass** ein der Spannhülse (112) abgewandter Endbereich des Gehäuses (108) nicht über eine der Spannhülse (112) abgewandte Begrenzungsfläche (222) des Grundkörpers (104) vorsteht.

15. Spannvorrichtung nach einem der Ansprüche 1 bis 14, **dadurch gekennzeichnet, dass** ein der Spannhülse (112) zugewandter Endbereich (236) des Gehäuses (108) einen Arretierkörperkäfig (238) zur Aufnahme von mehreren Arretierkörpern (148) umfasst.

16. Spannvorrichtung nach einem der Ansprüche 1 bis 15, **dadurch gekennzeichnet, dass** der Spannkolben (146) von Hand oder mittels einer Maschine, die eine mechanische Kraft auf den Spannkolben (146) überträgt, mit einer Betätigungskraft beaufschlagbar und hierdurch von der Spannstellung in die Freigabestellung bewegbar ist.

17. Kombination aus einer Spannvorrichtung (102) nach einem der Ansprüche 1 bis 16 und einem an dem Gehäuse (108) einspannbaren Wechselkörper (110), an dem mindestens eine Spannhülse (112) angeordnet ist.

18. Kombination nach Anspruch 17, **dadurch gekennzeichnet, dass** der Spannkolben (146) die Spannhülse (112) in der Freigabestellung und/oder in der Spannstellung nicht berührt.

19. Kombination nach einem der Ansprüche 17 oder 18, **dadurch gekennzeichnet, dass** der Spannkolben (146) und/oder das Gehäuse (108) bei an der Spannvorrichtung (102) angeordnetem Wechselkörper (110) in der Spannstellung und/oder In der Freigabestellung des Spannkolbens (146) nicht über eine dem Gehäuse (108) abgewandte Begrenzungsfläche (120) des Wechselkörpers (110) vorsteht.

## Claims

1. Clamping device for clamping an interchangeable body (110) on a housing (108) of the clamping device (102), comprising a housing (108) and
a locking device (106) for locking a clamping sleeve (112), which is arranged on the interchangeable body (110), relative to the housing (108),
wherein the locking device (106) comprises a clamping piston (146), which is movably guided in the housing (108) between a clamping position and a release position, and at least one locking body (148), which is movable by means of the clamping piston (146) from a release position, in which the locking body (148) enables a moving away of the clamping sleeve (112) from the housing (108), into a locking position, in which the locking body (148) prevents a moving away of the clamping sleeve (112) from the housing (108),
wherein the locking device (106) comprises an elastic biasing device (161), by means of which the clamping piston (146) is biasable into the clamping position, wherein the biasing device (161) comprises at least one elastic biasing element (160), which is arranged on the side of the clamping piston (146) facing away from the clamping sleeve (112), and wherein the clamping piston (146) is displaceable from the clamping position into the release position by acting upon the clamping piston (146) with an actuating force without supplying a pressurized fluid to the locking device (106),
**characterized in that**
the clamping piston (146) is also displaceable from the clamping position into the release position by acting upon a side of the clamping piston (146) facing toward the clamping sleeve (112) with a pressurized fluid.

2. Clamping device in accordance with Claim 1, **characterized in that** the clamping piston (146) has an actuating face (182), wherein the clamping piston (146) is displaceable from the clamping position into the release position by exerting a pressure from outside the housing (108) on the actuating face (182).

3. Clamping device in accordance with Claim 2, **characterized in that** the actuating face (182) of the clamping piston (146) in the clamping position is flush with an end face (183) of the housing (108) or projects beyond the housing (108).

4. Clamping device in accordance with any one of Claims 1 to 3, **characterized in that** the clamping piston (146) is displaceable from the clamping position into the release position in a toolless manner.

5. Clamping device in accordance with any one of Claims 1 to 4, **characterized in that** the clamping piston (146) is displaceable from the clamping position into the release position in a rectilinear manner.

6. Clamping device in accordance with any one of Claims 1 to 5, **characterized in that** the clamping piston (146) in the release position and/or in the clamping position is arranged completely within the housing (108).

7. Clamping device in accordance with any one of Claims 1 to 6, **characterized in that** the locking device (106) comprises a support element (158) on which the biasing element (160) is supported.

8. Clamping device in accordance with Claim 7, **characterized in that** the support element (158) is releasably held on the housing (108).

9. Clamping device in accordance with either of Claims 7 or 8, **characterized in that** the locking device (106) comprises a retaining element (166), which retains the biasing element (160) and/or the support element (158) in the housing (108).

10. Clamping device in accordance with any one of Claims 1 to 9, **characterized in that** the locking device (106) comprises at least one seal (206, 210) for sealing between the clamping piston (146) and the housing (108) in a fluid-tight manner.

11. Clamping device in accordance with any one of Claims 1 to 10, **characterized in that** the housing (108) comprises an abutment flange (254) with an abutment face (252) aligned perpendicularly to a direction of displacement (250) of the clamping piston (146), against which abutment face (252) the clamping sleeve (112) can abut.

12. Clamping device in accordance with any one of Claims 1 to 11, **characterized in that** the clamping device (102) comprises a base body (104) to which the housing (108) of the clamping device (102) is fixed.

13. Clamping device in accordance with Claim 12, **characterized in that** an end region (236) of the housing (108) facing toward the clamping sleeve (112) projects beyond a delimiting face (116) of the base body (104) facing toward the clamping sleeve (112).

14. Clamping device in accordance with either of Claims 12 or 13, **characterized in that** an end region of the housing (108) facing away from the clamping sleeve (112) does not project beyond a delimiting face (222) of the base body (104) facing away from the clamping sleeve (112).

15. Clamping device in accordance with any one of Claims 1 to 14, **characterized in that** an end region (236) of the housing (108) facing toward the clamping sleeve (112) comprises a locking body cage (238) for accommodating a plurality of locking bodies (148).

16. Clamping device in accordance with any one of Claims 1 to 15, **characterized in that** the clamping piston (146) can be acted upon with an actuating force by hand or by means of a machine that transmits a mechanical force to the clamping piston (146), and is thereby movable from the clamping position into the release position.

17. Combination of a clamping device (102) in accordance with any one of Claims 1 to 16 and an interchangeable body (110), which is clampable on the housing (102) and on which at least one clamping sleeve (112) is arranged.

18. Combination in accordance with Claim 17, **characterized in that** the clamping piston (146) does not contact the clamping sleeve (112) in the release position and/or in the clamping position.

19. Combination in accordance with either of Claims 17 or 18, **characterized in that** the clamping piston (146) and/or the housing (108), when the interchangeable body (110) is arranged on the clamping device (102), in the clamping position and/or in the release position of the clamping piston (146) does not project beyond a delimiting face (120) of the interchangeable body (110) facing away from the housing (108).

## Revendications

1. Dispositif de serrage pour (110) un corps interchangeable (110) sur un boîtier (108) du dispositif de serrage (102), comprenant
un boîtier (108) et
un dispositif d'arrêt (106) pour arrêter une douille de serrage (112) disposée (110) le corps interchangeable (110) par rapport au boîtier (108),
dans lequel le dispositif d'arrêt (106) comprend un piston de serrage (146) guidé de manière mobile dans le boîtier (108) entre une position de serrage et une position de libération et au moins un corps d'arrêt (148), qui peut être déplacé au moyen du piston de serrage (146) depuis une position de libération, dans laquelle le corps d'arrêt (148) libère un éloignement de la douille de serrage (112) par rapport au boîtier (108), dans une position d'arrêt, dans laquelle le corps d'arrêt (148) empêche un éloignement de la douille de serrage (112) par rapport au boîtier (108),
dans lequel le dispositif d'arrêt (106) comprend un dispositif de précontrainte (161) élastique, au moyen duquel le piston de serrage (146) peut être précontraint dans la position de serrage, dans lequel le système de précontrainte (161) comprend au moins un élément de précontrainte (160) élastique, lequel est disposé sur le côté, éloigné de la douille de serrage (112), du piston de serrage (146), et
dans lequel le piston de serrage (146) peut être déplacé depuis la position de serrage dans la position de libération avec une force d'actionnement sans apport d'un fluide sous pression vers le dispositif d'arrêt (106) par une sollicitation du piston de serrage (146),
**caractérisé en ce**
**que** le piston de serrage (146) peut être déplacé depuis la position de serrage dans la position de libération également par une sollicitation d'un côté, tourné vers la douille de serrage (112), du piston de serrage (146) avec un fluide sous pression.

2. Dispositif de serrage selon la revendication 1, **caractérisé en ce que** le piston de serrage (146) présente une surface d'actionnement (182), dans lequel le piston de serrage (146) peut être déplacé depuis la position de serrage dans la position de libération en exerçant une pression depuis l'extérieur du boîtier (108) sur la surface d'actionnement (182).

3. Dispositif de serrage selon la revendication 2, **caractérisé en ce que** la surface d'actionnement (182) du piston de serrage (146) est en affleurement avec une face frontale (183) du boîtier (108) dans la position de serrage ou fait saillie du boîtier (108).

4. Dispositif de serrage selon l'une des revendications 1 à 3, **caractérisé en ce que** le piston de serrage (146) peut être déplacé sans outil depuis la position de serrage dans la position de libération.

5. Dispositif de serrage selon l'une des revendications 1 à 4, **caractérisé en ce que** le piston de serrage (146) peut être déplacé de manière rectiligne depuis la position de serrage dans la position de libération.

6. Dispositif de serrage selon l'une des revendications 1 à 5, **caractérisé en ce que** le piston de serrage (146) est disposé dans la position de libération et/ou dans la position de serrage totalement à l'intérieur du boîtier (108).

7. Dispositif de serrage selon l'une des revendications 1 à 6, **caractérisé en ce que** le dispositif d'arrêt (106) comprend un élément de soutien (158), sur lequel l'élément de précontrainte (160) prend appui.

8. Dispositif de serrage selon la revendication 7, **caractérisé en ce que** l'élément de soutien (158) est maintenu de manière amovible sur le boîtier (108).

9. Dispositif de serrage selon l'une des revendications 7 ou 8, **caractérisé en ce que** le dispositif d'arrêt (106) comprend un élément de retenue (166), lequel retient dans le boîtier (108) l'élément de précontrainte (160) et/ou l'élément de soutien (158).

10. Dispositif de serrage selon l'une des revendications 1 à 9, **caractérisé en ce que** le dispositif d'arrêt (106) comprend au moins un joint d'étanchéité (206, 210) pour l'étanchéification de manière étanche aux fluides entre le piston de serrage (146) et le boîtier (108).

11. Dispositif de serrage selon l'une des revendications 1 à 10, **caractérisé en ce que** le boîtier (108) comprend une bride d'appui (254) ayant une surface d'appui (252), qui est orientée de manière perpendiculaire par rapport à une direction de coulissement (250) du piston de serrage (146) et sur laquelle la douille de serrage (112) peut être placée.

12. Dispositif de serrage selon l'une des revendications 1 à 11, **caractérisé en ce que** le dispositif de serrage (102) comprend un corps de base (104), sur lequel le boîtier (108) du dispositif de serrage (102) est fixé.

13. Dispositif de serrage selon la revendication 12, **caractérisé en ce qu'**une zone d'extrémité (236), tournée vers la douille de serrage (112), du boîtier (108) fait saillie d'une surface de délimitation (116), tournée vers la douille de serrage (112), du corps de base (104).

14. Dispositif de serrage selon l'une des revendications 12 ou 13, **caractérisé en ce qu'**une zone d'extrémité, éloignée de la douille de serrage (112), du boîtier (108) ne fait pas saillie d'une surface de délimitation (222), éloignée de la douille de serrage (112), du corps de base (104).

15. Dispositif de serrage selon l'une des revendications 1 à 14, **caractérisé en ce qu'**une zone d'extrémité (236), tournée vers la douille de serrage (112), du boîtier (108) comprend une cage de corps d'arrêt (238) pour loger plusieurs corps d'arrêt (148).

16. Dispositif de serrage selon l'une des revendications 1 à 15, **caractérisé en ce que** le piston de serrage (146) peut être soumis à l'action d'une force d'actionnement manuellement ou au moyen d'une machine, qui transmet une force mécanique sur le piston de serrage (146), et peut être déplacé ce faisant depuis la position de serrage dans la position de libération.

17. Combinaison d'un dispositif de serrage (102) selon l'une des revendications 1 à 16 et d'un corps interchangeable (110), qui peut être enserré sur le boîtier (108) et sur lequel au moins une douille de serrage (112) est disposée.

18. Combinaison selon la revendication 17, **caractérisée en ce que** le piston de serrage (146) n'entre pas en contact avec la douille de serrage (112) dans la position de libération et/ou dans la position de serrage.

19. Combinaison selon l'une des revendications 17 ou 18, **caractérisée en ce que** le piston de serrage (146) et/ou le boîtier (108) ne fait pas saillie d'une surface de délimitation (120), éloignée du boîtier (108), du corps interchangeable (110) dans la position de serrage et/ou dans la position de libération du piston de serrage (146) lorsque le corps interchangeable (110) est disposé sur le dispositif de serrage (102).
